(19) Europäisches Patentamt / European Patent Office / Office européen des brevets

(11) **EP 3 366 793 B1**

(12) # EUROPÄISCHE PATENTSCHRIFT

(45) Veröffentlichungstag und Bekanntmachung des Hinweises auf die Patenterteilung:
**12.08.2020 Patentblatt 2020/33**

(51) Int Cl.:
**C22C 9/06** (2006.01) **F16C 33/12** (2006.01)

(21) Anmeldenummer: **18000092.9**

(22) Anmeldetag: **02.02.2018**

(54) **GLEITELEMENT AUS EINER KUPFERLEGIERUNG**

SLIDING ELEMENT MADE OF A COPPER ALLOY

ÉLÉMENT COULISSANT EN ALLIAGE DE CUIVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2017 DE 102017001846**

(43) Veröffentlichungstag der Anmeldung:
**29.08.2018 Patentblatt 2018/35**

(73) Patentinhaber: **Wieland-Werke AG**
**89079 Ulm (DE)**

(72) Erfinder:
• **Kuhn, Hans-Achim**
**89257 Illertissen (DE)**
• **Seeger, Joerg**
**89073 Ulm (DE)**

(56) Entgegenhaltungen:
CN-A- 102 108 459     DD-B5- 291 581
DE-A1-102009 017 362  DE-C1- 4 415 629
JP-A- 2012 229 465    US-A1- 2009 263 053

• **CHENG J Y ET AL: "Evaluation of nanoscaled precipitates in a Cu-Ni-Si-Cr alloy", JOURNAL OF ALLOYS AND COMPOUNDS, ELSEVIER SEQUOIA, LAUSANNE, CH, Bd. 614, 23. Juni 2014 (2014-06-23), Seiten 189-195, XP029015698, ISSN: 0925-8388, DOI: 10.1016/J.JALLCOM.2014.06.089**

EP 3 366 793 B1

**Beschreibung**

Die Erfindung betrifft ein Gleitelement aus einer Kupferlegierung gemäß dem Oberbetriff des Anspruchs 1.

Gleitelemente aus Kupferlegierungen werden beispielsweise in Verbrennungsmotoren in Lageraugen des Pleuels oder der Kurbelwelle eingesetzt. Die technischen Anforderungen an den Werkstoff der Gleitelemente werden mit der Entwicklung moderner Motoren größer. Gesetzliche Vorschriften verlangen zudem, den Bleianteil im Werkstoff auf ein Minimum zu reduzieren. Gleichzeitig steigt der Druck, die Kosten der Gleitelemente zu senken.

Eine bekannte Kupfer-Zink-Legierung für Gleitelemente ist CuZn31Si1. Der Legierung können bis zu 0,8 Gew.-% Blei beigemengt sein, um die Zerspanbarkeit des Werkstoffs zu verbessen. Der hohe Anteil von Kupfer in dieser Legierung macht das Gleitelement teuer. Ferner ist bei dieser Legierung der Traganteil der verschleißbeständigen Gefügebestandteile zu gering, um zukünftig den Belastungen, die in modernen Motoren herrschen, Stand zu halten.

Aus der Druckschrift EP 2 128 282 A1 ist eine Kupferlegierung, ausgezeichnet in Festigkeit und Formbarkeit, zur Verwendung in elektrischen und elektronischen Bauteilen bekannt. Die Kupferlegierung weist 1,5 Gew.-% bis 4,5 Gew.-% Nickel (Ni) und 0,3 Gew.-% bis 1,0 Gew.-% Silicium (Si) auf. Zudem gegebenenfalls eines oder beide von 0,01 Gew.-% bis 1,3 Gew.-% Zinn (Sn) und 0,005 Gew.-% bis 0,2 Gew.-% Magnesium (Mg), 0,01 Gew.-% bis 5 Gew.-% Zink (Zn), eines oder beide von 0,01 Gew.-% bis 0,5 Gew.-% Mangan (Mn) und 0,001 Gew.-% bis 0,1 Gew.-% Chrom (Cr), insgesamt 0,1 Gew.-% oder weniger von mindestens einem Mitglied, ausgewählt aus der ersten Gruppe von Elementen, bestehend aus B, C, P, S, Ca, V, Ga, Ge, Nb, Mo, Hf, Ta, Bi, und Pb, jeweils in einer Menge von 0,0001 Gew.-% bis 0,1 Gew.-%, und insgesamt 1 Gew.-% oder weniger von mindestens einem Mitglied, ausgewählt aus der zweiten Gruppe von Elementen, bestehend aus Be, Al, Ti, Fe, Co, Zr, Ag, Cd, In, Sb, Te und Au, jeweils in einer Menge von 0,001 Gew.-% bis 1 Gew.-%, wobei die Gesamtmenge der ersten und zweiten Gruppe von Elementen 1 Gew.-% oder weniger beträgt, wobei der Rest Kupfer und unvermeidbare Verunreinigungen ist.

Des Weiteren ist aus der Druckschrift EP 2 463 393 A1 eine Kupferlegierung bekannt, die Ni: 1,5 Gew.-% bis 3,6 Gew.-% und Si: 0,3 Gew.-% bis 1,0 Gew.-% enthält, wobei der Rest aus Kupfer und unvermeidlichen Verunreinigungen besteht. Zudem kann die Kupferlegierung wahlweise ein oder mehrere Elemente, ausgewählt aus der Gruppe bestehend aus Fe, Mn, Mg, Co, Ti, Cr und Zr von insgesamt 0,01 Gew.-% bis 3,0% Gew.-% enthalten.

Die Kupferlegierung weist Kristallkörner mit einer mittleren Kristallkorngröße von 5 μm bis 30 μm auf. Das Flächenverhältnis der Kristallkörner, die nicht weniger als das Doppelte der durchschnittlichen Kristallkorngröße aufweisen, beträgt nicht weniger als 3 %; das Flächenverhältnis der Kristallkörner mit kubischer Orientierung zum Bereich der Kristallkörner mit Kristallkorngrößen nicht weniger als das Zweifache der durchschnittlichen Kristallkorngröße beträgt nicht weniger als 50 %.

Zudem ist aus der Druckschrift WO 2009/ 082 695 A1 eine Legierung auf Kupferbasis mit einer verbesserten Kombination von Streckgrenze und elektrischer Leitfähigkeit für elektronische Anwendungen bekannt. Die Kupferlegierung besteht im Wesentlichen aus 1,0 Gew.-% bis 6,0 Gew.-% Ni, bis zu etwa 3,0 Gew.-% Co, 0,5 Gew.-% bis 2,0 Gew.-% Si, 0,01 Gew.-% bis 0,5 Gew.-% Mg, bis zu 1,0 Gew.-% Cr, bis zu 1,0 Gew.-% Sn und bis zu 1,0 Gew.-% Mn, wobei der Rest Kupfer und Verunreinigungen sind. Die Legierung ist so bearbeitet, dass sie eine Streckgrenze von mindestens etwa 945 MPa und eine elektrische Leitfähigkeit von mindestens etwa 25 % IACS aufweist.

In der Druckschrift JP 2012 - 229 465 A ist eine Kupferlegierung als Gleitwerkstoff beschrieben, der ausgezeichnete Abriebfestigkeit durch eine für ein Lager geeignete Härte und ausgezeichnete Gleiteigenschaften durch geringe Reibung aufweist. Der Gleitwerkstoff besteht aus einer Cu-Ni-Si-Legierung, die 0,5 bis 10,0 Gew.-% Ni, 0,1 bis 5,0 Gew.-% Si, 0,1 bis 5,0 Gew.-% Cr, Rest Kupfer und unvermeidbare Verunreinigungen aufweist. Um gute Reibungseigenschaften zu erreichen und die Gleitfähigkeit zu verbessern ist vorzugsweise Bismut mit einem Anteil von 2,0 bis 20,0 Gew.-% beigefügt.

Zudem ist in der Druckschrift CN 1 02 108 459 A eine hochfeste Ni-Cr-Si-Kupferlegierung mit geringer Toxizität und niedrigen Kosten offenbart. Die Zusammensetzung der vorliegenden Erfindung beträgt: 2,1 bis 2,9 Gew.-% Ni, 0,4 bis 0,7 Gew.-% Cr, 0,3 bis 0,7 Gew.-% Si mit einer Gesamtmenge der Verunreinigungen ≤ 0,3 Gew.-% und Rest Cu.

Auch ist in der Druckschrift DD 291 581 B5 eine Legierung für Kaltkammer-Druckgusskolben beschrieben, die aus 2,7 bis 3,3 Gew.-% Ni, 0,45 bis 0,55 Gew.-% Cr, 0,8 bis 1,2 Gew.-% Si, 0,45 bis 0,55 Gew.-% Ti und Rest Cu besteht. Die Legierung wird im Vakuumverfahren erschmolzen und abgegossen, auf einer Strangpresse zu Bolzen gepresst, anschließend bei Temperaturen oberhalb von 1000 °C lösungsgeglüht, abgeschreckt und nachfolgend bei Temperaturen zwischen 400 und 500 °C warmausgehärtet.

Der Erfindung liegt die Aufgabe zugrunde, ein gegen Verschleiß durch Reibung gegen Stahl beständiges Gleitelement anzugeben und zudem eine Kupferlegierung weiterzubilden.

Die Erfindung wird durch die Merkmale des Anspruchs 1 wiedergegeben. Die weiteren rückbezogenen Ansprüche betreffen vorteilhafte Aus- und Weiterbildungen der Erfindung.

Bevorzugt enthält die Kupferlegierung einen Cr-Gehalt von zumindest 0,2 Gew.-%. Des Weiteren ist die Summe des Ti-Gehalts [Ti] und des Cr-Gehalts [Cr]: [Ti] + [Cr] größer oder gleich 0,2 %. Des Weiteren bevorzugt ist die Summe des Ti-Gehalts [Ti] und des Cr-Gehalts [Cr]: [Ti] + [Cr] kleiner oder gleich 1,2 %. So wird bei einem Gleitelement die Eignung zu gutem Setzverhalten und verbessertem Reibbeiwert bei Ölschmierung weiter verbessert.

Die Legierung des erfindungsgemäßen Gleitelements enthält Hartphasen, welche in die Legierungsmatrix eingebettet sind. Derartige Hartphasen bewirken einen wesentlichen Traganteil bei einer Reibpaarung. Es können sich auch mehrere Fraktionen von Hartphasen bilden, die sich aufgrund ihrer Partikelgröße unterscheiden.

Durch die mindestens eine Fraktion der vorstehend offenbarten Ausscheidungen wird durch die gebildeten Hartphasen ein Traganteil von bis zu ungefähr 3 % des Flächenanteils einer Reibpaarung bereitgestellt. Flächenanteile von bis zu 5 % schaffen immer noch besonders bevorzugte Traganteile. Hierdurch wird auch eine wesentliche Reduzierung der Reibbeiwerte bzw. der Gleitreibungskoeffizienten bewirkt.

Die wahlweise eingebrachten Elemente Magnesium, Aluminium und Eisen verbessern noch die mechanischen Eigenschaften bzw. die Resistenz gegenüber korrosiven Einflüssen.

Prinzipiell kann der Blei-Anteil in solchen Legierungen bis zu 0,8 Gew.-% betragen. Falls es die gesetzlichen Vorschriften erlauben, können der Legierung bei Bedarf bis zu 0,25 Gew.-% Blei als Spanbrecher zugegeben werden. In der vorliegenden Erfindung beträgt der Bleianteil maximal 0,1 Gew.-%. Bevorzugt weist die Legierung jedoch einen Bleianteil auf, der im Bereich der unvermeidbaren Verunreinigungen liegt. Die Funktion eines erfindungsgemäßen Gleitelements wird durch die Abwesenheit von Blei nicht beeinträchtigt.

Wahlweise können der Gleitelementlegierung noch bis zu 0,08 Gew.-% Phosphor zugegeben werden. Phosphor dient der Desoxidation der Schmelze und bildet mit Nickel Nickelphosphide, die ebenfalls zur Verschleißbeständigkeit beitragen.

Eine besondere Form von Gleitelementen sind Gleitlagerbuchsen. Bei Gleitlagerbuchsen wird aufgrund der unterschiedlichen Herstellungswege zwischen gerollten und gedrehten Buchsen unterschieden.

Gerollte Buchsen werden aus bandförmigem Halbzeug aus der erfindungsgemäßen Kupferlegierung hergestellt, indem ein entsprechend dimensionierter Bandabschnitt zu einem Hohlzylinder geformt wird und die aneinanderstoßenden Bandkanten verbunden werden. Bevorzugt wird das Material aus dem Band- und Plattenguss verwendet. Dabei wird als Gussformat beim Bandguss ein relativ dünnes Band gegossen. Gegossene Brammen werden im Unterschied zum dünnen Gussband warmumgeformt. Die Abkühlung aus der Warmumformungsstufe kann bereits zur Bildung der Cr-, Ti-, Si-haltigen Partikel führen. Um die nachfolgenden Prozessschritte aus Kaltumformung und Glühung hinsichtlich Endfestigkeit zu beeinflussen, wird aus der Warmumformstufe schnell abgekühlt.

Gedrehte Buchsen werden durch Zerspanung aus einem stangen-oder rohrförmigen Halbzeug aus der erfindungsgemäßen Kupferlegierung hergestellt. Zur Herstellung des Halbzeugs wird ein bolzenförmiges Gussformat gegossen, woraus durch einen Warmpressvorgang ein Pressrohr oder eine Stange gepresst wird. Aus dem jeweiligen Pressprodukt wird durch eine Abfolge von Ziehvorgängen das Halbzeug gewonnen, aus dem die Gleitlagerbuchse hergestellt wird. Für diesen Herstellungsweg muss die verwendete Legierung gut warm- und kaltumformbar sein. Ferner muss die Legierung zerspanbar sein.

Ein besonderer Vorteil eines aus der erfindungsgemäßen Kupferlegierung aufgebauten Gleitelements ist ein geringer Reibbeiwert bezogen auf im Markt eingesetzte Alternativlösungen. Zudem zeigt das erfindungsgemäße Gleitelement eine gute Beständigkeit gegen Spannungsrelaxation und ein damit verbundenes stabiles Setzverhalten, beispielsweise bei Lagerbuchsen [H.-A. Kuhn, M. Knab, R. Koch: Thermal Stability of Lead-free Wrought Cu-Based Alloys for Automotive Bushings, World of Metallurgy - ERZMETALL 60 (2007), 199]. Eine ebenfalls hohe Wärmeleitung des erfindungsgemäßen Gleitelements weist eine geringe Neigung zu thermisch induzierten Verspannungen im Werkstoff auf. Insgesamt handelt es sich bei der erfindungsgemäßen Lösung um ein Gleitelement aus einer Kupferlegierung in Form eines verschleißbeständigen duktilen Werkstoffs mit hoher Wärmeleitfähigkeit, einer Eignung zu gutem Setzverhalten und verbessertem Reibbeiwert bei Ölschmierung, insbesondere mit stählernen Reibpartnern. Insgesamt weist das dem Gleitlager zugrunde liegende tribologische System mit Ausscheidungen von Hartphasen weitere vorteilhafte Eigenschaften auf, indem es zulässt, Schmutzpartikel auf der Trioboberfläche einzubetten. Die verschleißbeständigen Ausscheidungen erhöhen in beträchtlichem Maße den Traganteil der Trioboberfläche.

Vorteilhafterweise kann das Verhältnis: $5,1 \leq ([Ni] + [Ti] + [Cr])/[Si] \leq 6,2$ betragen. Bei den Elementverhältnissen im angegebenen Intervall bilden sich in der Legierungsmatrix Verteilungen an Hartphasen aus, deren Traganteil bei einer Reibpaarung zu besonders geringer Verschleißneigung führt. Die Partikelanzahl und Größe liegt hierbei in einem besonders bevorzugten Bereich.

Gemäß der erfindungsgemäßen Lösung sind 2,3 bis 2,7 % Ni und 0,45 bis 0,65 % Si enthalten. Das ausgewählte Intervall der Elemente Nickel und Silicium stellt mit den weiteren Elementen Titan bzw. Chrom eine besonders geeignete Auswahl hinsichtlich der Partikelgröße und Verteilung dar.

Bei einer bevorzugten Ausführungsform der Erfindung kann mindestens eine Fraktion von Ausscheidungen vorliegen, wobei die Ausscheidungen mit einem volumenäquivalenten Kugeldurchmesser von zumindest 1,0 μm eine Dichte von 5.000 bis 20.000 Partikel pro mm² aufweisen. Bei den Ausscheidungen kann es sich um runde oder auch ellipsoidal verstreckte Partikel mit stöchiometrischer Zusammensetzung sowie um nicht stöchiometrische vorliegende Ausscheidungen der Systeme Cr-Ni-Si, TiSi oder Cr-Si handeln. Des Weiteren kann es sich bei den Ausscheidungen um runde oder auch ellipsoidal verstreckte Partikel mit stöchiometrischer Zusammensetzung sowie um nicht stöchiometrische vorliegende Ausscheidungen des Systems Ti-Ni-Si handeln. Der Ni-Anteil kann hierbei vorteilhafterweise größer oder gleich dem Ti-Anteil sein. Nicht gerundete Partikel mit einem eher eckig bzw. kantigem Erscheinungsbild können ebenso in der Legierungsmatrix eingebettet sein.

In dieser Ausgestaltung kann die Legierung des erfindungsgemäßen Gleitelements auch mehrere Populationen an Ausscheidungen enthalten. Beispielsweise aus einer ersten Population mit relativ kleinen Ausscheidungen und zumindest einer zweiten Population mit relativ großen Ausscheidungen. Die großen Ausscheidungen wirken als besonders verschleißbeständiger Traganteil. Ihr Volumenanteil im Gefüge kann vergleichsweise gering sein und zwischen 1 und 2 % betragen. Aufgrund der geringen Dichte der zweiten Population verbleiben zwischen diesen relativ große Zwischenräume. Diese Zwischenräume werden durch die erste Population mit kleineren Ausscheidungen stabilisiert. Indem die erste Population die Matrix in den Zwischenräumen stabilisiert, verhindern sie das Herausbrechen der großen Ausscheidungen der zweiten Population.

Bei den Ausscheidungen handelt es sich um eine in eine Legierungsmatrix eingebettete Hartphase, welche einen wesentlichen Traganteil bei einer Reibpaarung bewirken kann.

Bei einer weiteren vorteilhaften Ausführungsform kann mindestens eine Fraktion von Ausscheidungen vorliegen, wobei die Ausscheidungen mit einem volumenäquivalenten Kugeldurchmesser von zumindest 1,0 $\mu$m eine Dichte von 10.000 bis 20.000 Partikel pro mm$^2$ aufweisen. Der die positiven Gleiteigenschaften bestimmende Hartphasenanteil ist durch eine hohe Partikeldichte gewährleistet.

Vorteilhafterweise kann mindestens eine Fraktion von Ausscheidungen vorliegen, wobei die Ausscheidungen mit einem volumenäquivalenten Kugeldurchmesser von zumindest 1,0 $\mu$m und höchstens 3,0 $\mu$m eine Dichte von 10.000 bis 18.000 Partikel pro mm$^2$ aufweisen. Hierbei liegt der maßgebliche Anteil der Ausscheidungen im Größenintervall zwischen 1,0 $\mu$m bis 3,0 $\mu$m. Größere Ausscheidungen kommen dabei eher vereinzelt vor.

In bevorzugter Ausgestaltung der Erfindung können die Ausscheidungen Cr-haltige und/oder Ti-haltige Silizide sein. Bei den Ausscheidungen kann es sich um runde oder auch ellipsoidal verstreckte Partikel der Zusammensetzung (Cr,Ni)$_2$Si, (Cr,Ni)$_3$Si, Cr$_3$Si sowie um nicht stöchiometrisch vorliegende Ausscheidungen der Systeme Cr-Ni-Si oder Cr-Si handeln. Des Weiteren kann es sich bei den Ausscheidungen um runde oder auch ellipsoidal verstreckte Partikel der Zusammensetzung (Ti,Ni)$_2$Si, (Ti,Ni)$_3$Si, Ti$_5$Si$_3$ sowie um nicht stöchiometrisch vorliegende Ausscheidungen des Systems Ti-Ni-Si handeln. Der Ni-Anteil kann hierbei vorteilhafterweise größer oder gleich dem Ti-Anteil sein.

Bei bevorzugten Ausführungsform der Erfindung kann der Ti-Anteil und/oder Cr-Anteil höchstens 1,0 Gew.-% betragen. Bei einer weiteren vorteilhaften Ausführungsform kann der Ti-Anteil und/oder Cr-Anteil zumindest 0,45 Gew.-% und höchstens 0,95 Gew.-% betragen. Hierdurch wird bei den in die Legierungsmatrix eingebetteten Hartphasen ein besonders günstiger Traganteil bei einer Reibpaarung eingestellt. Zudem führt dies zu einer guten Beständigkeit gegen Spannungsrelaxation und ein damit verbundenes gutes Setzverhalten des Werkstoffs. So wird ein Gleitelement mit einer Kupferlegierung in Form eines verschleißbeständigen duktilen Werkstoffs mit hoher Wärmeleitfähigkeit, einer Eignung zu gutem Setzverhalten und verbessertem Reibbeiwert bei Ölschmierung angegeben.

Vorteilhafterweise kann die elektrische Leitfähigkeit nach einer thermischen Behandlung zwischen 300°C und 600°C zumindest 25 MS/m betragen. Zudem bevorzugt kann die abschließende thermische Behandlung bei einer Temperatur zwischen 400°C und 500°C liegen. Hierbei kann es sich bei der thermischen Behandlung um den letzten abschließenden thermischen Prozessschritt handeln. Die elektrische Leitfähigkeit steht in unmittelbarem Zusammenhang mit der thermischen Leitfähigkeit. Mit der genannten thermischen Behandlung werden beispielsweise mit Zeitdauern von 1 bis 3 Stunden bei der Legierung auch die bevorzugten mechanischen Eigenschaften abschließend eingestellt.

In bevorzugter Ausgestaltung der Erfindung kann das Verhältnis aus der thermischen Ausdehnung $\alpha$ im Temperaturbereich 20°C bis 300°C und aus der Wärmeleitfähigkeit $\lambda$ bei Raumtemperatur: $\alpha/\lambda = 0,09$ bis $0,20$ $\mu$m/W betragen. Eine Wärmeleitfähigkeit $\lambda$ ist auch verbunden mit einer vergleichsweise hohen elektrischen Leitfähigkeit von bis zu 29,5 MS/m. Diese elektrische Leitfähigkeit liegt signifikant über derjenigen der Cr- bzw. Ti-freien Vergleichsproben.

Bei einer bevorzugten Ausführungsform der Erfindung kann die Härte nach einer abschließenden thermischen Behandlung zwischen 300°C und 600°C zumindest 150 HBW 2,5/62,5 betragen. Zudem bevorzugt kann die abschließende thermische Behandlung bei einer Temperatur zwischen 400°C und 500°C liegen.

Die Erfindung wird anhand von Ausführungsbeispielen näher erläutert.

Verschiedene Proben von Gleitelement-Kupferlegierungen wurden erschmolzen und Gussprofile abgegossen. Nach einem Abfräsen der Gusshaut betrug die Dicke d der Proben ca. 20 mm. Anschließend erfolgte ein Warmwalzprozess mit einem Abwalzen an 8 mm, verbunden mit einem Abschrecken mittels Wasser. Darauffolgend wurde mittels Kaltwalzens an 2 mm abgewalzt. Ein abschließendes Auslagern erfolgte bei einer Temperatur von 300 bis 600 °C für ca. 2 Stunden. Tabelle 1 zeigt beispielhaft die Zusammensetzung einzelner Proben, welche bei 450 °C ausgelagert wurden.

Tabelle 1: Zusammensetzung von Legierungsvarianten [Gew.-%]:

| Probe Nr. | Cu | Ni | Si | Ti | Cr | (Ni+Ti+Cr)/Si | Ni/Si | Eignung |
|---|---|---|---|---|---|---|---|---|
| 1 | Rest | 2,35 | 0,61 | 0,83 | - | 5,21 | 3,85 | exzellent |
| 2 | Rest | 2,4 | 0,6 | 0,5 | - | 4,83 | 4,00 | exzellent |
| 3 | Rest | 2,4 | 0,6 | 0,2 | - | 4,33 | 4,00 | gut |
| Vergleichsbeispiele | | | | | | | | |
| 4 | Rest | 2,41 | 0,58 | - | 1,14 | 6,12 | 4,16 | exzellent |
| 5 | Rest | 2,4 | 0,6 | - | 0,7 | 5,16 | 4,00 | exzellent |
| 6 | Rest | 2,4 | 0,6 | - | 0,46 | 4,76 | 4,00 | gut |
| 7 | Rest | 2,4 | 0,6 | - | 0,22 | 4,36 | 4,00 | gut |
| | | | | | | | | |
| 8 | Rest | 2,4 | 0,6 | 0,5 | 0,2 | 5,17 | 4,00 | gut |
| 9 | Rest | 2,4 | 0,6 | 0,2 | 0,46 | 5,10 | 4,00 | gut |
| Vergleichsbeispiele | | | | | | | | |
| 10 | Rest | 2,4 | 0,6 | 0,048 | - | 4,08 | 4,00 | Nicht ausreichend! |
| 11 | Rest | 2,36 | 0,58 | - | - | 4,07 | 4,07 | Nicht ausreichend! |

Die Proben Nr. 1 und 4 weisen besonders bevorzugte Eigenschaften für eine Eignung für erfindungsgemäße Gleitlager auf.

Gleitelemente, insbesondere Buchsen, sind im motorischen Betrieb thermisch induzierten Spannungen bzw. Verzerrungen ausgesetzt. Derartige thermisch induzierte Verzerrungen hängen vom werkstoffspezifischen Verhältnis aus dem mittleren thermischen Ausdehnungskoeffizienten $\alpha$ und der Wärmeleitfähigkeit $\lambda$ ab. Wegen des vergleichsweise geringen thermischen Ausdehnungskoeffizienten $\alpha$ und der signifikant höheren Wärmeleitfähigkeit $\lambda$ (Angaben in Tabelle 2 beziehen sich auf Raumtemperatur RT) sind die thermisch induzierten Verzerrungen in Lagerbuchsen, insbesondere der in Tabelle 2 gelisteten niedriglegierten Kupferwerkstoffe der Proben 1 und 4, vorteilhaft gering ausgeprägt.

Tabelle 2: Physikalische Kennwerte der Proben Nr. 1 und 4 nach abschließender Wärmebehandlung mit weiteren Vergleichsproben:

| Probe Nr./ Legierung | Härte HB | Elektr. Leitfähigkeit (MS/m) | Wärmeleitfähigkeit $\lambda$ (W/mK) bei RT | thermischer Ausdehnungskoeffizient a x $10^6$ K (20°C bis 300°C) | $\alpha/\lambda$ ($\mu$m) bei RT |
|---|---|---|---|---|---|
| 1 | 159 | 21,1 | 140 | 17,5 | 0,125 |
| 4 | 198 | 25,4 | 160 | 18 | 0,113 |
| CuNi6Sn6 | 240 | 8,5 | 55 | 18 | 0,327 |
| CuZn31Mn2Si1Al1NiFe | 190 | 11,5 | 75 | 19,6 | 0,261 |
| CuZn37Mn3Al2PbSi | 165 | 7,8 | 63 | 20,4 | 0,324 |

Da beispielsweise Gleitlagerbuchsen meist in höher festes Pleuelmaterial eingebracht sind, würden thermisch induzierte Verzerrungen zusätzliche mechanische Spannungen verursachen. Geringere thermisch induzierte Verzerrungen sind folglich auch von Vorteil für eine Beständigkeit gegen eine unerwünschte Spannungsrelaxation. Hieraus resultiert auch ein vorteilhaftes temperatur- und zeitabhängiges Setzverhalten von Gleitlagern, insbesondere von Buchsen.

Die Verschleißbeständigkeit eines erfindungsgemäßen Gleitelements wird anhand geeigneter Versuche ermittelt und in Relation zur Verschleißbeständigkeit von Gleitelementen aus bekannten Werkstoffen gesetzt. Verschleißtests zeigen insbesondere bei den in Tabelle 2 genannten Proben 1 und 4 keine ausgeprägten Einlaufphasen.

## Diagramm 1: Reibwerte μ (Proben Nr. 1 und 4 mit Vergleichsproben)

Die Reibwerte μ in Diagramm 1 und die Verschleißraten in Diagramm 2 der Proben 1 und 4 sowie Proben aus Vergleichslegierungen wurden während eines Dauerlaufs mit einem Tribometer ermittelt. Die Reibpaarung besteht aus einer flachen Scheibe der Legierung und ringförmigen Segmenten aus dem Stahl 100Cr6. Der Stahl rotiert mit einer Gleitgeschwindigkeit von 1 m/sec auf dem Blech des Kupferwerkstoffs. Die Reibpartner werden in einem handelsüblichen Motoröl bei einer Temperatur von 120 °C geschmiert. Nach einer zweistufigen Einlaufphase wird über 5,5 h eine konstante Last von 600 N aufgebracht. Dabei beträgt die Flächenpressung 9 N/mm$^2$.

## Diagramm 2: Verschleiß (Proben Nr. 1 und 4 mit Vergleichsproben)

Im Vergleich mit heute bereits verwendeten kupferbasierten Lagerwerkstoffen zeichnen sich die erfindungsgemäßen Legierungen durch einen niedrigeren mittleren Reibbeiwert aus. Beide Ausführungsbeispiele 1 und 4 verschleißen signifikant weniger als die Zinn-Nickel-Bronze sowie ein bewährtes eisenhaltiges Sondermessing mit Mischsiliziden.

**Patentansprüche**

1.  Gleitelement aus einer Kupferlegierung, welche die folgenden Bestandteile (in Gew.-%) enthält:

    2,3 bis 2,7 % Ni,
    0,45 bis 0,65 % Si,
    bis 1,5 % Ti und/oder Cr,
    wahlweise von 0,05 bis 1,5 % Co,
    wahlweise jeweils von 0,05 bis 0,1 % Mg, Al, Fe,
    wahlweise von 0,01 bis 0,1 % Pb,
    wahlweise von 0,002 bis 0,01 % P,
    Rest Cu und unvermeidbare Verunreinigungen,
    **dadurch gekennzeichnet,**

    - **dass** der Ti-Gehalt zumindest 0,2 Gew.-% beträgt, und
    - **dass** das Verhältnis aus der Summe des Ni-Gehalts [Ni], Ti-Gehalts [Ti] und Cr-Gehalts [Cr] zum Si-Gehalt [Si]:

    $$4,3 \leq ([Ni] + [Ti] + [Cr])/[Si] \leq 6,5$$

    beträgt.

2.  Gleitelement nach Anspruch 1, **dadurch gekennzeichnet, dass** das Verhältnis:

    $$5,1 \leq ([Ni] + [Ti] + [Cr])/[Si] \leq 6,2$$

    beträgt.

3.  Gleitelement nach Anspruch 1 oder 2, **dadurch gekennzeichnet, dass** mindestens eine Fraktion von Ausscheidungen vorliegt, wobei die Ausscheidungen mit einem volumenäquivalenten Kugeldurchmesser von zumindest 1,0 $\mu$m eine Dichte von 5.000 bis 20.000 Partikel pro mm$^2$ aufweisen.

4.  Gleitelement nach Anspruch 3, **dadurch gekennzeichnet, dass** mindestens eine Fraktion von Ausscheidungen vorliegt, wobei die Ausscheidungen mit einem volumenäquivalenten Kugeldurchmesser von zumindest 1,0 $\mu$m eine Dichte von 10.000 bis 20.000 Partikel pro mm$^2$ aufweisen.

5.  Gleitelement nach Anspruch 4, **dadurch gekennzeichnet, dass** mindestens eine Fraktion von Ausscheidungen vorliegt, wobei die Ausscheidungen mit einem volumenäquivalenten Kugeldurchmesser von zumindest 1,0 $\mu$m und höchstens 3,0 $\mu$m eine Dichte von 10.000 bis 18.000 Partikel pro mm$^2$ aufweisen.

6.  Gleitelement nach einem der Ansprüche 3 bis 5, **dadurch gekennzeichnet, dass** die Ausscheidungen Cr-haltige und/oder Ti-haltige Silizide sind.

7.  Gleitelement nach einem der Ansprüche 1 bis 6, **dadurch gekennzeichnet, dass** der Ti-Anteil und/oder Cr-Anteil höchstens 1,0 Gew.-% beträgt.

8.  Gleitelement nach Anspruch 7, **dadurch gekennzeichnet, dass** der Ti-Anteil und/oder Cr-Anteil zumindest 0,45 Gew.-% und höchstens 0,95 Gew.-% beträgt.

**9.** Gleitelement nach einem der Ansprüche 1 bis 8, **dadurch gekennzeichnet, dass** die elektrische Leitfähigkeit nach einer thermischen Behandlung zwischen 300°C und 600°C zumindest 25 MS/m beträgt.

**10.** Gleitelement nach einem der Ansprüche 1 bis 9, **dadurch gekennzeichnet, dass** das Verhältnis aus dem thermischen Ausdehnungskoeffizient $\alpha$ im Temperaturbereich 20°C bis 300°C und aus der Wärmeleitfähigkeit $\lambda$ bei Raumtemperatur:

$$\alpha/\lambda = 0,09 \text{ bis } 0,20 \text{ µm/W}$$

beträgt.

**11.** Gleitelement nach einem der Ansprüche 1 bis 10, **dadurch gekennzeichnet, dass** die Härte nach einer abschließenden thermischen Behandlung zwischen 300°C und 600°C zumindest 150 HBW 2,5/62,5 beträgt.

**Claims**

**1.** Sliding element comprising a copper alloy which contains the following components (in % by weight):

from 2.3 to 2.7% Ni,
from 0.45 to 0.65% Si,
up to 1.5% Ti and/or Cr,
optionally from 0.05 to 1.5% Co,
optionally from 0.05 to 0.1% Mg, Al, Fe, respectively,
optionally from 0.01 to 0.1% Pb,
optionally from 0.002 to 0.01% P,
the balance being Cu and unavoidable impurities,
**characterised in that**

- the Ti content is at least 0.2% by weight and
- **in that** the ratio of the total of the Ni content [Ni], Ti content [Ti] and Cr content [Cr] in relation to the Si content [Si] is:

$$4.3 \leq ([Ni]+[Ti]+[Cr])/[Si] \leq 6.5.$$

**2.** Sliding element according to claim 1, **characterised in that** the ratio is:

$$5.1 \leq ([Ni]+[Ti]+[Cr])/[Si] \leq 6.2.$$

**3.** Sliding element according to claim 1 or claim 2, **characterised in that** at least a fraction of precipitations is present, wherein the precipitations with a volume-equivalent spherical diameter of at least 1.0 $\mu$m have a density of from 5,000 to 20,000 particles per mm$^2$.

**4.** Sliding element according to claim 3, **characterised in that** at least a fraction of precipitations is present, wherein the precipitations with a volume-equivalent spherical diameter of at least 1.0 $\mu$m have a density of from 10,000 to 20,000 particles per mm$^2$.

**5.** Sliding element according to claim 4, **characterised in that** at least a fraction of precipitations is present, wherein the precipitations with a volume-equivalent spherical diameter of at least 1.0 $\mu$m and a maximum of 3.0 $\mu$m have a density of from 10,000 to 18,000 particles per mm$^2$.

**6.** Sliding element according to any one of claims 3 to 5, **characterised in that** the precipitations are Cr-containing and/or Ti-containing silicides.

**7.** Sliding element according to any one of claims 1 to 6, **characterised in that** the Ti portion and/or Cr portion is/are a maximum of 1.0% by weight.

**8.** Sliding element according to claim 7, **characterised in that** the Ti portion and/or Cr portion is/are at least 0.45% by weight and a maximum of 0.95% by weight.

**9.** Sliding element according to any one of claims 1 to 8, **characterised in that** the electrical conductivity after a thermal processing operation between 300°C and 600°C is at least 25 MS/m.

**10.** Sliding element according to any one of claims 1 to 9, **characterised in that** the ratio of the thermal expansion coefficient $\alpha$ in the temperature range from 20°C to 300°C and the thermal conductivity $\lambda$ at ambient temperature is:

$$\alpha/\lambda = \text{from } 0.09 \text{ to } 0.20 \text{ } \mu m/W.$$

**11.** Sliding element according to any one of claims 1 to 10, **characterised in that** the hardness after a final thermal processing operation between 300°C and 600°C is at least 150 HBW 2.5/62.5.

**Revendications**

**1.** Élément coulissant en un alliage de cuivre, qui contient les composants suivants (en % en poids):

2,3 à 2,7 % de Ni,
0,45 à 0,65 % de Si,
jusqu'à 1,5 % de Ti et/ou Cr,
éventuellement de 0,05 à 1,5 % de Co,
éventuellement dans chaque cas de 0,05 à 0,1 % de Mg, Al, Fe,
éventuellement de 0,01 à 0,1 % de Pb,
éventuellement de 0,002 à 0,01 % de P,
complément Cu et impuretés inévitables,

**caractérisé**

- **en ce que** la teneur en Ti est d'au moins 0,2 % en poids, et
- **en ce que** le rapport de la somme de la teneur en Ni [Ni], de la teneur en Ti [Ti] et de la teneur en Cr [Cr] à la teneur en Si [Si] est:

$$4,3 \leq ([Ni] + [Ti] + [Cr])/[Si] \leq 6,5.$$

**2.** Elément coulissant selon la revendication 1, **caractérisé en ce que** le rapport est:

$$5,1 \leq ([Ni] + [Ti] + [Cr])/[Si] \leq 6,2.$$

**3.** Elément coulissant selon la revendication 1 ou 2, **caractérisé en ce qu'**au moins une fraction de précipités est présente, dans lequel les précipités ayant un diamètre de sphère équivalent en volume d'au moins 1,0 $\mu$m présentent une densité de 5 000 à 20 000 particules par mm$^2$.

**4.** Elément coulissant selon la revendication 3, **caractérisé en ce qu'**au moins une fraction de précipités est présente, dans lequel les précipités ayant un diamètre de sphère équivalent en volume d'au moins 1,0 $\mu$m présentent une densité de 10 000 à 20 000 particules par mm$^2$.

**5.** Elément coulissant selon la revendication 4, **caractérisé en ce qu'**au moins une fraction de précipités est présente, dans lequel les précipités ayant un diamètre de sphère équivalent en volume d'au moins 1,0 $\mu$m et d'au plus 3,0 $\mu$m présentent une densité de 10 000 à 18 000 particules par mm$^2$.

6. Elément coulissant selon l'une des revendications 3 à 5, **caractérisé en ce que** les précipités sont des siliciures contenant Cr et/ou contenant Ti.

7. Elément coulissant selon l'une des revendications 1 à 6, **caractérisé en ce que** la proportion de Ti et/ou la proportion de Cr est d'au plus 1,0 % en poids.

8. Elément coulissant selon la revendication 7, **caractérisé en ce que** la proportion de Ti et/ou la proportion de Cr est d'au moins 0,45 % en poids et d'au plus 0,95 % en poids.

9. Elément coulissant selon l'une des revendications 1 à 8, **caractérisé en ce que** la conductivité électrique après un traitement thermique entre 300°C et 600°C est d'au moins 25 MS/m.

10. Elément coulissant selon l'une des revendications 1 à 9, **caractérisé en ce que** le rapport entre le coefficient de dilatation thermique $\alpha$ dans la plage de températures de 20°C à 300°C et la conductivité thermique $\lambda$ à température ambiante est:

$$\alpha/\lambda = 0{,}09 \text{ à } 0{,}20 \text{ } \mu\text{m/W}.$$

11. Elément coulissant selon l'une des revendications 1 à 10, **caractérisé en ce que** la dureté après un traitement thermique final entre 300°C et 600°C est d'au moins 150 HBW 2,5/62,5.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2128282 A1
- EP 2463393 A1
- WO 2009082695 A1
- JP 2012229465 A
- CN 102108459 A
- DD 291581 B5